Europäisches Patentamt

European Patent Office

Office européen des brevets

(11) Publication number: **0 152 657**
**B1**

# EUROPEAN PATENT SPECIFICATION

(45) Date of publication of patent specification: **11.11.87**

(51) Int. Cl.⁴: **A 23 L 1/20, A 23 C 21/04**

(21) Application number: **84300666.9**

(22) Date of filing: **02.02.84**

(54) A high protein food product containing a large proportion of whey and a method of making the same.

(43) Date of publication of application:
**28.08.85 Bulletin 85/35**

(45) Publication of the grant of the patent:
**11.11.87 Bulletin 87/46**

(84) Designated Contracting States:
**AT BE CH DE FR GB IT LI LU NL SE**

(56) References cited:
**CH-A- 475 715**
**FR-A-2 196 760**
**FR-A-2 215 903**
**US-A-3 531 294**
**US-A-3 865 956**
**US-A-3 888 996**

(73) Proprietor: **Bily, Robert Raymond**
**10048 Bon Vista Court**
**San Jose California 95127 (US)**

(72) Inventor: **Bily, Robert Raymond**
**10048 Bon Vista Court**
**San Jose California 95127 (US)**

(74) Representative: **Ellis-Jones, Patrick George Armine et al**
**J.A. KEMP & CO. 14 South Square Gray's Inn**
**London WC1R 5EU (GB)**

Courier Press, Leamington Spa, England.

**Description**

This invention relates to a high protein food product containing a large proportion of whey solids.

Whey is the serum or watery part of milk that separates from the curds in the process of making cheese. It is the largest by-product of the dairy industry, and also one of the most troublesome. It is now having considerable impact on economic and environmental affairs.

Approximately ten parts of milk are used to produce one part of cheese, and from six to nine parts of whey result. The whey contains from 6 to 7% solids—about half those in milk.

If whey is unused, its organic nutrients make it a costly pollutant in sewage systems and waterways. At the same time disposal in this way is very wasteful of valuable nutrients.

It is clear, therefore, that it is important to find ways of utilizing whey as a food supplement. Whey used in commerce is usually dehydrated into whey solids which are then dried. Every part of dry whey solids utilized removes approximately sixteen parts of liquid whey from the environment. However, for human consumption, whey solids seldom represents more than 4% by weight of the final food, principally because of its disagreeable odor and flavor. A primary use of whey is in desserts but large quantities of sweeteners are needed to mask the off-flavors and relatively large quantities of fat to mask the gritty character of the whey solids. In some instances, whey solids are included with other ingredients to form a powdered milk replacer but the amount of whey solids in the finished food product derived from the powdered milk usually does not exceed 1.5% by weight. Higher amounts are added to various low-moisture snack foods but these are usually flavored, sweetened or salted. Since whey solids are over 70% lactose, foods utilizing significant amounts of whey solids must be very low in moisture or the other ingredients must be able to absorb and bind the humectant properties of the lactose which are activated by the addition of moisture to form a syrup-like emulsion which creates a tenderizing effect, since otherwise, the water-whey solids phase separates out resulting in a syrup-like and/or gritty consistency in the final product. In low moisture (up to 19% moisture) foods this separation results in crystallization. So-called "moist foods" generally contain more than 35% moisture.

The object of this invention is to provide a product which, while utilizing a relatively large portion of whey solids, has excellent flavor, body, texture and an exceedingly high food value at low cost. According to the present invention there is provided a process of preparing a high protein whey-soybean product comprising cooking previously uncooked dry soybeans until they are cooked to a firm texture, comminuting the cooked soybeans in finely ground form in the presence of water to form a soy paste without evidence of free water in which constituents of the cooked soybeans released upon comminution of the cooked soybeans are uniformly dispersed in comminuted form in the soy paste, mixing said soy paste with whey solids to inter-react the whey constituents with the released constituents in the soy paste and form a paste without evidence of free water of the intermixed and inter-reacted constituents of the soy paste and the whey solids.

In the present invention, the whey solids are incorporated in a homogeneous paste made from soybeans and water prepared in a particular manner, which masks any off-flavor and gritty character.

The use of soybeans is unexpectedly unique in comparison with other legumes and cereals. Cooked soybeans contain quantities of oil, lecithin and protein not found in other legumes, cereals or other vegetables and these are believed to be necessary to perfect cooperation with the whey solids. Thus the high protein content (over 40% in dry whole soybeans) binds the water and the whey solids into a stable, cohesive, homogeneous, smooth mixture which does not whey-off, providing excellent body, texture and cohesion in the final product. The emulsification properties of the soybean's protein contribute form and stabilization to the final product while promoting oil absorption and water uptake and retention. Simultaneously, the oil content (about 20% by weight of the dry soybean) adds a rich creaminess while coating the whey solids and helping to prevent grittiness.

The high lecithin content in the dry soybean (about 2.5% by weight) is able to emulsify the oil and disperse it in the water phase; it promotes the stabilization of oil, protein and water into a homogeneous whole. Furthermore, it aids in the binding, mixing and dispersion of the lactose and other whey solids with the oil, protein and water; this again helps to prevent grittiness or wheying-off. Flavor is also improved because the off-flavors of the whey solids can be dispersed evenly by the oil and lecithin of the soybean which are known to be flavor carriers. Indeed the flavor of the product is noticeably different from that of any of the components.

The humectant properties of the lactose in the whey solids are activated by the water phase of the soy-paste carrier. The large amounts of oil, lecithin and protein present are sufficient to emulsify, bind and stabilize the whey solids and the high concentration of lactose therein so that separation of syrup-like constituents does not occur and the lactose is hesd in homogeneous suspension to provide a smooth, palatable body and texture which also enables the product to be mixed easily with other foods. Shelf-life is also improved due to the anti-oxidant properties of the high lecithin and tocopherol content of the soybean.

As a result the whey solids are kept in a stable, homogeneous suspension within the soy paste so that the distribution of the off-flavors and grittiness is such that they do not affect the overall flavor, body and texture of the product.

It has been found that other legumes, cereals and other vegetable foods are too high in carbohydrates and too low in oil, lecithin and protein to provide the cooperative relationship needed for the incorporation of large quantities of whey solids; dry legumes except peanuts contain, on average, approximately 22% protein, 1.5% oil and trace amounts of lecithin while dry cereal grains contain, on average, approximately 10% protein, 2% oil and trace amounts of lecithin. As a result they create bodies and textures that are either too gritty, sticky or mushy and all are subject to separation into a thin and syrup-like part and a lumpy and rubbery part.

Peanuts contain approximately 25% protein, 47% oil and 0.4% lecithin, on average. Their oil content is too high and their lecithin and protein contents are too low to bind water, oil and whey solids effectively into a stable, cohesive mixture. The high oil content of the peanuts gives the mixture a pudding-like consistency similar to sour cream. Furthermore, the peanut flavor of the mixture is very strong compared to that of most other legumes and cereal grains, and the high oil content is apparent.

It is important that the dry soybeans be freshly cooked for the first time immediately prior to use. Previously cooked and dehydrated soybeans or soybean materials are not suitable as these do not interact satisfactorily with the whey solids such that the product generally has a bitter off-taste. The beans should not be overcooked to a soft texture because this denatures their protein. Firmly textured soy-beans provide the product with better body and texture by binding the humectant properties of the whey solids to a greater degree.

The soybeans are preferably processed as follows. They are first rinsed and then soaked in water for, say, 30 to 40 minutes after which they are removed and placed in a pressure cooker with water. Preferably they are not dehulled because the hulls are a good source of dietary fiber.

After being held in the pressure cooker at a temperature of, say, 220° to 230°F (104 to 110°C) for 30 minutes, the beans are firm to the touch and require some pressure before they can be crushed between the fingers. Other methods of moisture cooking can be used to give the soybeans a firm body, such as boiling, cooking in hot water or steaming. The water in which the beans are cooked may be saved. The soybeans are then ground to a fine particle size, in a suitable food processor, with sufficient water to form a paste (the "soy-paste"). If general up to 120% by weight of water based on the weight of the cooked soybeans may be used but amounts of 40—50% by weight are generally preferred. Amounts in excess of 120% tend to cause overdilution. Obviously, the beans can absorb varying amounts of water in their cooking and may need more or less water in the blending. The cooking water from the cooked soybeans is preferable to fresh tap water because of enhanced flavor.

The nature of the grinding and mixing processes is important. The soybeans must be comminuted to a very fine, pulverized condition to allow for complete intermixture and reaction with the whey solids. This is best accomplished by first cutting the cooked soybeans in a high speed food processor such as a Hobart VCM mixer or a home appliance such as the Sunbeam "Le Chef" food processor with steel cutting and processing blade attachement. Since the soybeans are firm, this step will reduce the cooked soybeans to a powdery, granular size. At this point, water is added to slurry the soybean granules so they can be further processed into a paste-like consistency.

The whey solids, which can be of the sweet or acid type, are then added to the soy-paste, generally in an amount from 12% to 63% by weight of the soy-paste, increasing proportionately to the water content which is generally from 35 to 120% by weight of the cooked soybeans. In this range, off-flavors and grittiness can be eliminated. A preferred formula includes approximately 100 parts of cooked ground soybeans, 50 parts of water and 35 parts of whey solids.

Rather than adding dry whey solids and water, liquid condensed whey can be used, adjusting the moisture and solids content of the condensate to equal the required amounts of water and whey solids.

The body and texture of the soy-paste-whey solids mixture can be enhanced by the addition small quantities of two other ingredients, soy protein isolate and non-fat dry milk but these ingredients cannot be used as replacements for the freshly cooked soybean materials and whey solids. They can, of course, be added independently of one another although the best results can generally be obtained by using both. When soy protein isolate is used alone to enhance body and texture, it is suitably added in the range of 3% to 18% by weight of the soy-paste. When non-fat dry milk is used alone, it is suitably added in the range of 5% to 33% by weight of the soy-paste. In both cases amounts are desirably increased with increasing amounts of water and whey solids.

Soy protein isolate can, in particular aid in the emulsification, the binding of oil and water, the stabilization and cohesion of the product very effectively without the presence of non-fat dry milk; but when used alone, it diminishes the humectant properties of the whey solids and this detracts from the smoothness and moistness of the product. Non-fat dry milk is not as effective as the isolate when used alone because the isolate is about 92% protein and non-fat dry milk is only 36% protein while containing approximately 51% lactose. Therefore, more non-fat dry milk has to be used for comparable results and this adds more lactose to the system which creates a softer body and texture of in the final product.

It has been found that the following amounts enhanced the body and texture of the soy-paste-whey solids mixture in the best manner while maintaining the balance of flavor; soy protein isolate in an amount from 2% to 10% and non-fat dry milk from 3% to 17%, both by weight of the soy-paste. These amounts increase proportionately to increases in water and whey solids in the soy-paste.

A preferred overall formula comprises approximately 100 parts of cooked ground soybeans, 50 parts of water, 35 parts of whey powder, 5 parts soy protein isolate and 7 parts non-fat dry milk. It is possible to substitute soy protein concentrate which is approximately 70% protein for the soy protein isolate provided it is bland in flavor and added in equivalent amount.

The mixing process is important to obtain the necessary reactions of the oil, lecithin and protein of the soybeans with the water, whey solids and lactose therein as well as with the soy protein isolate and skim milk solids when added. The mixing can be effected by using a high speed mixer with double whisk attachments made from type 302 spring tempered stainless steel wires operating in a planetary gear arrangement orbiting around a central gear shaft, similar to French whips, for example a Waring Superbowl Mixer, model No. 11 SM 11. The various ingredients are physically forced together by the compression created by the direct impact of the whisks against the various ingredients. Thorough homogeneous mixing and the chemical reactions and bonding described can be ensured by the rapid rotation of the whisks for, say, 1 to 4 minutes depending upon the fullness of the mixing container, for example initially at 160 rpm, increasing the speed to 230 rpm, and finally to 320 rpm, at the end of the run, after 3 to 4 minutes when the bowl is about half full.

It is preferable not to cover the mixing whisks more than half way, so impact and movement can be maximized.

It is possible to determine when the ingredients are properly mixed and reacted visually, because the entire character of the mixture changes, the soy-paste becoming smooth, light and fluffy, but firm and stable in body and texture. The fluffing effect is due in part to the tenderizing effect of the lactose and the properties of the soy and milk proteins. The milk protein, lactalbumin, found in whey and milk solids has excellent foaming properties. However, the lactalbumin does not have the ability to stabilize the fluffiness of the product; stabilization is due to the lecithin and the soybean proteins.

What is achieved is far more than the mere aggregation of the functions and effects of the separate ingredients. This is because of the interactions of the oil, lecithin and protein from the comminuted soybeans with water, soy protein isolate and the lactose and proteins in whey and skim milk solids when subjected to the high speed mixing. The combination results in a new product which is not merely the sum of the separate effects of the separate ingredients.

The following Example further illustrates the present invention.

Example

The following Table recites the ingredients and percentages thereof employed:

| Ingredient | Percentage | Weight |
| --- | --- | --- |
| Cooked Ground Soybeans | | 300 gms |
| Water (to make soy-paste) | 40% by weight of the cooked soybeans | 120 gms |
| Whey Solids | 20% by weight of the soy-paste | 84 gms |
| Soy Protein Isolate | 3% by weight of the soy-paste | 12.6 gms |
| Non-Fat Dry Milk | 4% by weight of the soy-paste | 16.8 gms |

The dry whole soybeans are rinsed and allowed to soak for 40 minutes and then placed in a pressure cooker and covered with water. Once a temperature of approximately 225°F (107°C) is reached, the soybeans are cooked approximately at this temperature for 30 minutes. The beans are then removed from the heat and the water is drained and saved. 300 gms. of the cooked soybeans are ground or cut to a fine particle size and then mixed with 120 gms. of the water. This process further reduces the particle size of the beans and creates the desired soy-paste. The soy-paste is then transferred to a suitable mixer and the other dry ingredients are added in the amounts indicated in the Table. The percentage of each of the dry ingredients is determined by the initial weight of the soy-paste i.e. the combination of cooked soybeans and the added water, and not the cooked soybeans alone. Preferably, the isolate is added last. The final mixture is mixed into a homogeneous mass and stored under refrigeration.

**Claims**

1. The process of preparing a high protein whey-soybean product comprising cooking previously uncooked dry soybeans until they are cooked to a firm texture, comminuting the cooked soybeans in finely ground form in the presence of water to form a soy paste without evidence of free water in which constituents of the cooked soybeans released upon comminution of the cooked soybeans are uniformly dispersed in comminuted form in the soy paste, mixing said soy paste with whey solids to inter-react the whey constituents with the released constituents in the soy paste and form a paste without evidence of free water of the intermixed and inter-reacted constituents of the soy paste and the whey solids.

2. A process according to claim 1 wherein water is present in an amount of from 35 to 120% by weight of the cooked soybeans and whey solids are mixed in an amount of 12% to 63% by weight of the soy paste.

3. process according to claim 1 or 2, wherein from 5% to 33% of non-fat dry milk by weight of the soy paste is mixed with the soy paste and whey.

4. A process according to claim 3, wherein from 3% to 17% of non-fat dry milk by weight of the soy paste is mixed with the soy paste and whey.

5. A process according to any one of claims 1 to 4, wherein from 3% to 18% of soy-protein isolate by weight of the soy paste is mixed with the soy paste and whey.

6. A process according to claim 5 wherein from 2% to 10% of soy-protein isolate by weight of the soy paste is mixed with the soy paste and whey.

7. A process according to any one of the preceding claims, in which the amount of water used to form the soy paste corresponds to 40 to 50% by weight of the soybeans.

**Patentansprüche**

1. Verfahren zur Zubereitung eines Molke-Sojabohnen-Produktes mit hohem Proteingehalt mit folgenden Verfahrensschritten:
—Kochen der vorher ungekochten, trockenen Sojabohnen, bis sie eine feste Beschaffenheit aufweisen,
—Vermahlen der gekochten Sojabohnen in feingemahlene Form in der Anwesenheit von Wasser, um eine Sojapaste ohne Spuren freien Wassers zu bilden, in der die aufgrund der Vermahlung der gekochten Sojabohnen freigesetzten Bestandteile der gekochten Sojabohnen gleichmäßig in vermahlener Form in der Sojapaste verteilt sind,
—Vermischen der Sojapaste mit Molke-Feststoffen, um die Molkebestandteile mit den freigesetzten Bestandteilen in der Sojapast reagieren zu lassen und
—Bilden einer Paste ohne Spuren freien Wassers aus dem vermischten und miteinander reagiert habenden Bestanteilen der Sojapaste und der Molke-Feststoffe.

2. Verfahren nach Anspruch 1, wobei Wasser in einer Menge von 35—120 Gew.-% der gekochten Sojabohnen vorhanden ist und die Molke-Feststoffe in einer Menge von 12—63 Gew.-% der Sojapaste hinzugemischt werden.

3. Verfahren nach Anspruch 1 oder 2, wobei 5—33% fettloser Trockenmilch bezogen auf das Gewicht der Sojapaste mit dieser und der Molke vermischt werden.

4. Verfahren nach Anspruch 3, wobei 3—17% fettloser Trockenmilch bezogen auf das Gewicht der Sojapaste mit der Sojapaste und der Molke vermischt werden.

5. Verfahren nach einem der Ansprüche 1 bis 4, wobei 3—18% isolierten Soja-Proteins bezogen auf das Gewicht der Sojapaste mit der Sojapaste und der Molke vermischt werden.

6. Verfahren nach Anspruch 5, wobei 2—10% isolierten Sojaproteins bezogen auf das Gewicht der Sojapaste mit der Sojapaste und der Molke vermischt werden.

7. Verfahren nach einem der vorgenannten Ansprüche, wobei die Menge des für die Bildung der Sojapaste verwendeten Wassers etwa 40—50 Gew.-% der Sojabohnen entspricht.

**Revendications**

1. Procédé de préparation d'un produit petit-lait-soja à haute teneur en protéines consistant à faire cuire des graines de soja sèches et n'ayant pas précédemment été cuites, jusqu'à ce qu'elles soient cuites jusqu'à une texture ferme, à concasser ces graines de soja cuites, sous forme finement moulue en présence d'eau de façon à former une pâte de soja ne laissant pas apparaître d'eau libre et dans laquelle les constituants des graines de soja cuites qui sont libérés lors du concassage de ces graines cuites se trouvent uniformément dispersés sous forme finement broyée dans la pâte de soja, à mélanger cette pâte de soja avec des matières solides du petit-lait de façon à faire réagir mutuellement les constituants du petit-lait avec les constituants libérés dans la pâte de soja et à réaliser une pâte formée par les constituants de la pâte de soja et des matières solides du petit-lait qui ont été mélangés entre eux et ont réagi mutuellement, cette pâte formée ne laissant pas apparaître d'eau libre.

2. Procédé suivant la revendication 1, selon lequel l'eau est présente dans une proportion de 35 à 120% en poids par rapport aux graines de soja cuites et on mélange les matières solides du petit-lait dans une proportion de 12% à 63% en poids par rapport à la pâte de soja.

3. Procédé suivant la revendication 1 ou 2, selon lequel on mélange à la pâte de soja et au petit-lait de 5% à 33% de lait sec sans matières grasses, en poids par rapport à la pâte de soja.

4. Procédé suivant la revendication 3, selon lequel on mélange à la pâte de soja et au petit-lait de 3% à 17% de lait sec dans matières grasses, en poids par rapport à la pâte de soja.

5. Procédé suivant l'une quelconque des revendications 1 à 4, selon lequel on mélange à la pâte de soja et au petit-lait de 3% à 18% d'extrait de protéines de soja, en poids par rapport à la pâte de soja.

6. Procédé suivant la revendication 5, selon lequel on mélange à la pâte de soja et au petit-lait de 2% à 10% d'extrait de protéines de soja, en poids par rapport à la pâte de soja.

7. Procédé suivant l'une quelconque des revendications précédentes, selon lequel la proportion d'eau utilisée pour former la pâte de soja correspond à 40 à 50% du poids des graines de soja.